# FASCICULE DE BREVET EUROPEEN

(11) **EP 2 792 129 B1**
(45) Date de publication et mention de la délivrance du brevet: **13.03.2019**
(21) Numéro de dépôt: 12801558.3
(22) Date de dépôt: 12.12.2012
(51) Int. Cl.: H04L 29/12, H04L 29/08

(54) **PROCEDE D'ASSOCIATION D'UN TERMINAL MACHINE AVEC UN TERMINAL UTILISATEUR**
VERFAHREN ZUR ASSOZIATION EINES MASCHINENENDGERÄTS MIT EINEM BENUTZERENDGERÄT
METHOD OF ASSOCIATION OF A MACHINE TERMINAL WITH A USER TERMINAL

(30) Priorité: 12.12.2011 FR 1161490
(43) Date de publication de la demande: 22.10.2014
(73) Titulaire: GEMALTO SA, 92190 Meudon (FR)
(72) Inventeur: LAMBERTON, Marc, F-06600 Antibes (FR); ANSLOT, Michel, F-06250 Mougins (FR); COPPE, Gilles, F-06560 Valbonne (FR); BOUCKAERT, Philippe, F-06410 Biot (FR)
(74) Mandataire: Cassagne, Philippe M.J.
(86) Numéro de dépôt international: PCT/EP2012/075276
(87) Numéro de publication internationale: WO 2013/087715

(56) Documents cités:
- EP-A2- 2 071 800
- US-A1- 2006 135 064
- US-A1- 2007 123 166
- MCCUNE J M ET AL: "Seeing-Is-Believing: Using Camera Phones for Human-Verifiable Authentication", SECURITY AND PRIVACY, 2005 IEEE SYMPOSIUM ON OAKLAND, CA, USA 08-11 MAY 2005, PISCATAWAY, NJ, USA,IEEE, 8 mai 2005 (2005-05-08), pages 110-124, XP010798367, DOI: 10.1109/SP.2005.19 ISBN: 978-0-7695-2339-2
- Paul Stamatiou: "Pingie! Free RSS to SMS - PaulStamatiou.com", , 2 January 2008 (2008-01-02), pages 1-4, XP055502459, Retrieved from the Internet: URL:https://paulstamatiou.com/pingie-free- rss-to-sms/ [retrieved on 2018-08-27]

## Description

Le domaine technique de l'invention est celui des réseaux de communication cellulaire et particulièrement l'utilisation de tels réseaux par des machines, dites terminaux machine, pour communiquer entre elles.

Plus particulièrement l'invention concerne un tel terminal machine dédié à une tâche donnée et apte à rendre compte de cette tâche à un utilisateur en le contactant, via un réseau de communication cellulaire, sur un terminal associé à l'utilisateur, dit terminal utilisateur, par exemple le téléphone mobile de l'utilisateur.

Le problème qui se pose alors, lors de la mise en service du terminal machine après son achat par l'utilisateur, est la configuration dudit terminal machine pour lui associer une adresse du terminal utilisateur afin que le terminal machine puisse lui adresser ses comptes rendus ou ses alertes.

Il est connu de réaliser une telle configuration en utilisant des moyens d'interface homme machine classiques, par exemple de type clavier, du terminal machine lui-même s'il en dispose, ou d'un autre moyen connecté au réseau de communication cellulaire, afin de saisir une adresse du terminal utilisateur, telle son numéro de téléphone, afin de l'associer au terminal machine.

Une telle approche est cependant complexe au risque de décourager un utilisateur peu technicien.

Une autre approche est décrite dans le document EP 2 071 800. Elle consiste à prendre en photo une donnée d'information d'un objet pour obtenir une image. L'image est ensuite transmise à un ordinateur pour y être analysée par un traitement d'analyse d'image.

Un objet de la présente invention est de simplifier les procédés connus de configuration d'un terminal machine par association d'une adresse d'un terminal utilisateur.

A cet effet, la présente invention prévoit un procédé de configuration selon la revendication 1.

Un autre aspect de la présente invention concerne un produit programme d'ordinateur selon la revendication 8.

Un autre aspect de la présente invention concerne un module de gestion selon la revendication 14.

Un autre aspect de la présente invention concerne un système selon la revendication 9.

De manière facultative, l'invention comprend des caractéristiques selon les revendications dépendantes.

D'autres caractéristiques, détails et avantages de l'invention ressortiront plus clairement de la description détaillée donnée ci-après à titre indicatif en relation avec des dessins sur lesquels :
- la figure 1 présente un synoptique général d'un environnement indicatif de l'invention,
- la figure 2, présente un diagramme illustrant un mode de réalisation du procédé d'association.

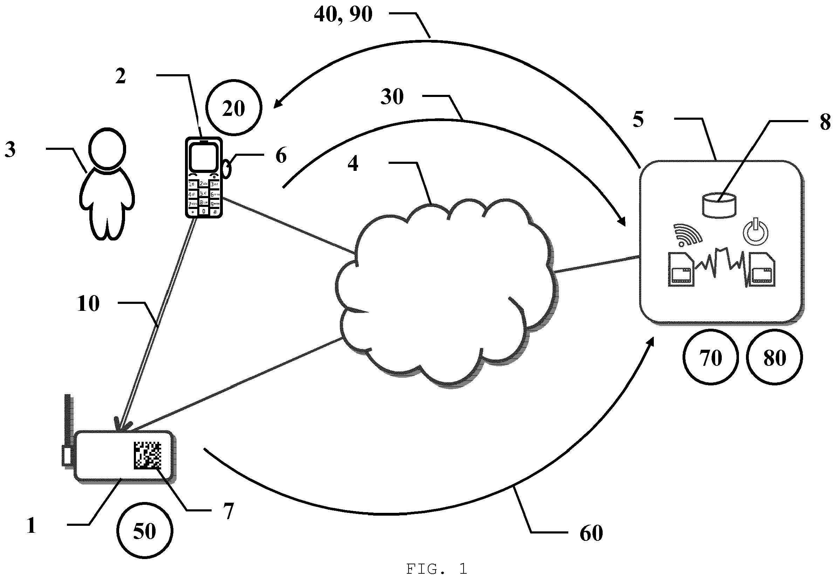

Le synoptique de la figure 1 présente les différents intervenants. Autour d'un réseau de communication 4 se trouvent deux terminaux 1, 2 aptes à se connecter audit réseau de communication 4. Typiquement le réseau de communication est un réseau de communication cellulaire. Les terminaux 1, 2 comprennent tous les moyens nécessaires pour réaliser une telle connexion. Ces moyens comprennent entre autres, des équipements radiofréquences tels que : émetteur, récepteur et antenne. Ils comprennent encore un abonnement audit réseau de communication 4, matérialisé par une carte module universel d'identification d'abonné ou en anglais « universal subscriber identifier module » ou USIM ou carte à puce ou carte à microcircuits. Cette carte USIM est classiquement une carte à puce insérée dans le terminal 1, 2. Cette carte USIM stocke dans une mémoire sécurisée les paramètres nécessaires à réaliser une connexion, tels par exemple, un identifiant international d'abonné mobile ou en anglais « International Subscriber Mobile Identifier » ou IMSI permettant d'identifier et de localiser ledit terminal ou un numéro d'abonné mobile à un réseau à intégration de services ou en anglais « Mobile Subscriber Integrated Services Digital Network Number" ou MSISDN. Ces deux derniers paramètres sont des exemples d'adresse du terminal 1, 2 sur le réseau de communication 4 permettant de désigner ledit terminal 1, 2 ou plus précisément sa carte USIM, afin de lui adresser un message ou une communication.

Chacun de ces deux terminaux 1, 2, s'ils sont similaires du point de vue de la connectivité au réseau de communication 4, sont particularisés par leurs autres moyens et fonctions.

Un terminal 1 que l'on désigne par le terme de terminal machine 1 figure génériquement une machine, au sens où il s'agit d'un terminal ayant une fonction par exemple de surveillance. Pour réaliser cette fonction il peut comprendre des moyens de mesure. Il assure ainsi une fonction de capteur et peut par exemple capter une température, un courant, une pression, un signal lumineux, une valeur numérique ou analogique etc. Un tel terminal machine 1 utilise typiquement le réseau de communication 4 pour transmettre au moins un compte-rendu produit par lui. Dans le cadre de la présente invention, un compte rendu peut être l'un quelconque parmi : une ou plusieurs mesures d'un paramètre, une ou plusieurs valeurs binaires, un ou plusieurs résultats, une ou plusieurs alarmes. Pour ce faire il emploie typiquement l'un au moins des moyens de communication de données offerts par le réseau de communication 4 tel un message court service ou en anglais « short message service » ou SMS.

Un autre terminal 2 que l'on désigne par le terme de terminal utilisateur 2 figure génériquement un terminal plus classique d'un réseau de communication 4, en ce qu'il est conçu pour permettre à un utilisateur 3 de communiquer par la voix ou les données, via le réseau de communication 4. Le terme désigne ici un téléphone mobile, ou tout autre terminal ayant les fonctions d'un tel téléphone : smartphone, assistant digital personnel ou PDA, tablette graphique, ordinateur portable équipé d'une carte USIM, etc. Il est de préférence équipé d'une interface graphique utilisateur.

Les deux types 1, 2 de terminaux sont aptes à se connecter au réseau de communication 4. Ledit réseau de communication 4 comprend encore au moins un module 5 apte à réaliser une fonction particulière pour le compte du réseau de communication 4.

Dans le scénario envisagé pour l'invention, un terminal machine 1 est apte à produire au moins un compte-rendu, typiquement résultant de sa fonction de machine. Par exemple le terminal machine 1 est affecté à une fonction de surveillance d'un équipement et doit envoyer une alarme à un utilisateur 3 lorsque ledit équipement est, par exemple, en défaut. Pour cela le terminal machine 1 doit être configuré en lui associant une adresse lui permettant d'envoyer son compte-rendu à l'attention de l'utilisateur 3. Ladite adresse est par exemple l'adresse sur le réseau d'un terminal associé à l'utilisateur 3, tel que le terminal utilisateur 2.

Lors de sa fabrication et jusqu'à sa première mise en fonctionnement, le terminal machine 1 est vierge, en ce qu'il n'est pas encore configuré pour un utilisateur 3 donné. Il convient donc lors de la première connexion du terminal machine 1 au réseau de communication 4, de pouvoir lui associer au moins une adresse @U d'un terminal utilisateur 2 associé à l'utilisateur 3. Cette association, une fois configurée doit permettre, y compris lors des connexions ultérieures, de transmettre les comptes rendus émis par le terminal machine 1 au terminal utilisateur 2, à l'attention de l'utilisateur 3.

L'objectif d'une telle configuration est de réaliser une association d'une adresse @M du terminal machine 1 sur le réseau de communication 4 et d'au moins une adresse @U du terminal utilisateur 2 sur le réseau de communication 4.

On entend ici par adresse @M du terminal machine 1 tout identificateur permettant de reconnaître ledit terminal machine 1 et tout particulièrement en tant qu'émetteur d'un message. Ainsi une telle adresse @M de terminal machine 1 doit permettre lorsque un message provenant dudit terminal machine 1 est reçu de reconnaître le terminal machine 1 émetteur. De préférence, une telle adresse @M d'un terminal machine 1 peut être un code IMSI, un numéro de téléphone court ou long par exemple sous forme d'un code MSISDN.

Il est à noter cependant, que même si un terminal machine 1 dispose d'une carte USIM qui lui est propre, afin de ne pas encombrer l'espace des codes MSISDN, le plus souvent, il n'est pas associé un identifiant public unique de type MSISDN à un terminal machine 1. Au lieu de cela, un terminal machine se voit associé un identifiant privé. Il n'est pas possible d'adresser directement le terminal machine 1 au moyen de cet identifiant privé, comme il serait possible de le faire avec un identifiant public MSISDN. Un tel identifiant privé est connu et géré par un module MLR dédié à la gestion et à l'adressage d'un ensemble de terminaux machines 1. Un exemple d'un tel module MLR est décrit dans la demande de brevet européen N° 11306123.8 déposée le 9 Septembre 2011 par le même demandeur.

Un tel module MLR se substitue, pour les terminaux machines 1 au moins et éventuellement pour les terminaux utilisateurs 2, et leur gestion à certains modules du réseau de communication cellulaire 4. Parmi ces modules, se trouvent le module registre de localisation HLR et le module registre d'identité d'équipement EIR. Le module MLR se substitue ainsi à ces modules EIR, HLR, qu'il remplace pour la gestion des terminaux machines et éventuellement utilisateurs. Ainsi pour les terminaux machines, toute communication à destination d'un module HLR, EIR, est redirigée vers le module MLR qui les remplace. Le module MLR remplit, pour les terminaux machines, les mêmes fonctions que ces modules et répond en conséquence aux requêtes des demandeurs. Ceci permet avantageusement de centraliser tous les traitements afférents aux terminaux machines au sein d'un même module MLR.

Il n'est pas possible d'envoyer directement un message à un terminal machine 1 au moyen de son code MSISDN, puisque ce code MSISDN est absent. Au lieu de cela un terminal qui souhaite envoyer un message à un terminal machine 1, ainsi géré par un module MLR, envoie ledit message au module MLR, en utilisant le code MSISDN dudit module MLR, assorti de l'identifiant privé désignant de manière univoque le terminal machine 1. Ledit identifiant privé permet au module MLR d'identifier et de localiser le terminal machine 1 destinataire. Le module MLR est alors en mesure de faire suivre le message au terminal machine 1.

Dans ce cas alternatif l'adresse @M du terminal machine 1 comprend d'une part le code MSISDN du module MLR de gestion et l'identifiant privé spécifique du terminal machine 1.

Une adresse @U du terminal utilisateur 2 désigne une adresse de terminal utilisateur 2 en tant que récepteur d'un message. Une adresse @U de terminal utilisateur 2 doit permettre lorsqu'un message est reçu à destination du terminal utilisateur 2 de trouver ledit terminal utilisateur 2 sur le réseau de communication 4 afin de lui faire distribuer ledit message. Une adresse @U d'un terminal utilisateur 2 peut ainsi être un code IMSI, un numéro de téléphone court ou long par exemple sous forme d'un code MSISDN.

Pour réaliser une association d'une adresse @M d'un terminal machine 1 avec au moins une adresse @U d'au moins un terminal utilisateur 2, selon une caractéristique avantageuse de l'invention, le terminal machine 1 comprend avantageusement un moyen d'affichage d'un pictogramme 7. Ce pictogramme 7 est conçu de manière à coder une adresse @M du terminal machine 1 sur le réseau de communication 4.

Un tel pictogramme 7 peut ainsi comprendre l'adresse @M du terminal machine 1 écrite en clair. Cependant, afin de pouvoir présenter une densité élevée d'information et afin de pouvoir être lu par un moyen optique 6, le pictogramme 1 utilise avantageusement un standard de codage des informations. Ce standard de codage utilisé pour le pictogramme 7 peut ainsi comprendre un code barre, un code flash, un code QR acronyme de l'anglais Quick Response qui signifie à réponse rapide, ou tout autre moyen de codage équivalent.

Différents moyens d'affichage du pictogramme 7 sont envisageables. Selon un premier mode de réalisation ledit moyen d'affichage est simplement une impression du pictogramme 7. Ce mode est avantageux en ce qu'il permet une réalisation particulièrement économique. Ce mode de réalisation peut se décliner en plusieurs variantes.

Selon une première variante le pictogramme 7 est imprimé sur le terminal machine 1. Une telle variante est avantageuse en ce que le pictogramme 7 accompagne toujours le terminal machine 1 et est ainsi imperdable. A contrario, il est difficile de cacher le pictogramme 7 qui peut ainsi être vu/lu, y compris par un lecteur non autorisé.

Selon une variante alternative ou complémentaire, le pictogramme 7 est imprimé sur un support annexe associé au terminal machine 1. Un tel support peut être de toute forme ou nature du moment qu'il est apte à accueillir l'impression. Il peut s'agir, par exemple, d'une carte plastique. Il peut encore s'agir du livret documentaire ou de l'emballage du terminal machine 1. Un tel support annexe est typiquement délivré à un utilisateur 3 lors de l'achat du terminal machine 1. L'utilisation d'un support annexe de pictogramme 7, physiquement séparé du terminal machine 1, permet avantageusement de réaliser une configuration, y compris en l'absence du terminal machine 1, si l'on est en présence dudit support annexe. Cette séparation permet encore avantageusement de protéger l'accès au pictogramme 7, l'accès au support annexe étant réputé réservé au seul utilisateur 3.

L'impression du pictogramme 7 peut être réalisée directement sur le terminal machine 1 ou directement sur le support annexe associé au terminal machine 1. Alternativement, la réalisation du pictogramme 7 peut avantageusement être réalisée en deux temps. Dans un premier temps le pictogramme 7 est imprimé sur une étiquette. Dans un second temps ladite étiquette est fixée sur le terminal machine 1 ou sur le support annexe associé au terminal machine 1.

Selon un autre mode de réalisation, le moyen d'affichage du pictogramme 7 comprend un écran apte à afficher le pictogramme 7. Ledit écran peut, ou non, être un écran associé ou attaché au terminal machine 1. Un tel mode de réalisation est plus coûteux, mais peut permettre d'introduire une procédure particulière, telle un contrôle d'accès, afin de n'afficher le pictogramme 7 qu'en réponse à une demande autorisée validée par un contrôle d'accès positif.

Revenons maintenant au contenu codé par ledit pictogramme 7. Selon le standard de codage utilisé, il est possible, par exemple avec un code bidimensionnel, de coder plusieurs dizaines de caractères alphanumériques. Ceci est donc largement suffisant pour coder une adresse @M du terminal machine 1, quelle que soit sa forme.

Le contenu codé comprend ainsi, selon un premier mode de réalisation, l'adresse @M du terminal machine 1, indiquée par exemple par un numéro de téléphone/code MSISDN, en version courte ou longue, propre au terminal machine 1. Un tel mode de réalisation nécessite que chaque terminal machine 1 soit affecté d'un code MSISDN public propre.

Le contenu codé comprend ainsi, selon un second mode de réalisation, l'adresse d'un module de gestion 5, indiquée par exemple par un numéro de téléphone/code MSISDN, en version courte ou longue, dudit module de gestion 5. Ladite adresse du module de gestion 5 est encore accompagnée d'un identificateur privé du terminal machine 1, signifiant pour ledit module de gestion 5.

Puisque, le plus souvent, il reste de la place disponible dans le contenu codé, il est avantageux, en plus de l'adresse @M du terminal machine 1 d'ajouter dans ledit contenu codé un moyen de vérification de cohérence de l'adresse @M du terminal machine 1. Un tel moyen comprend typiquement des éléments redondants codant au moins partiellement des éléments compris dans l'adresse @M du terminal machine 1. Ceci permet de vérifier la validité de l'adresse @M. Un exemple d'un mode de réalisation d'un tel moyen de vérification de cohérence est une somme de contrôle reprenant au moins partiellement ladite adresse @M.

Un tel moyen de vérification de cohérence permet avantageusement de dédier le pictogramme 7 à une utilisation selon l'invention et de certifier la provenance du pictogramme 7. Ceci permet ainsi d'éviter une confusion avec un pictogramme 7 similaire utilisé pour une autre application. Ceci permet encore d'empêcher une synthèse non autorisée, et donc potentiellement malveillante, d'un tel pictogramme 7 de configuration.

Un tel terminal 1, tel un terminal machine 1, ainsi doté d'un pictogramme 7 codant son adresse @M, peut avantageusement participer à un procédé de configuration par association. Un tel procédé de configuration réalise une association d'un terminal machine 1 avec au moins un terminal utilisateur 2. Ceci est réalisé par indication d'une adresse @M du terminal machine 1 et d'une adresse @U du terminal utilisateur 2, ces deux adresses permettant d'identifier et d'adresser le terminal correspondant au sein du réseau de communication 4.

Pour cela, selon l'invention, le terminal utilisateur 2 comprend un moyen de capture d'image 6. Il est à noter que ceci est de plus en plus souvent le cas, les téléphones mobiles étant majoritairement équipés d'un appareil photo intégré.

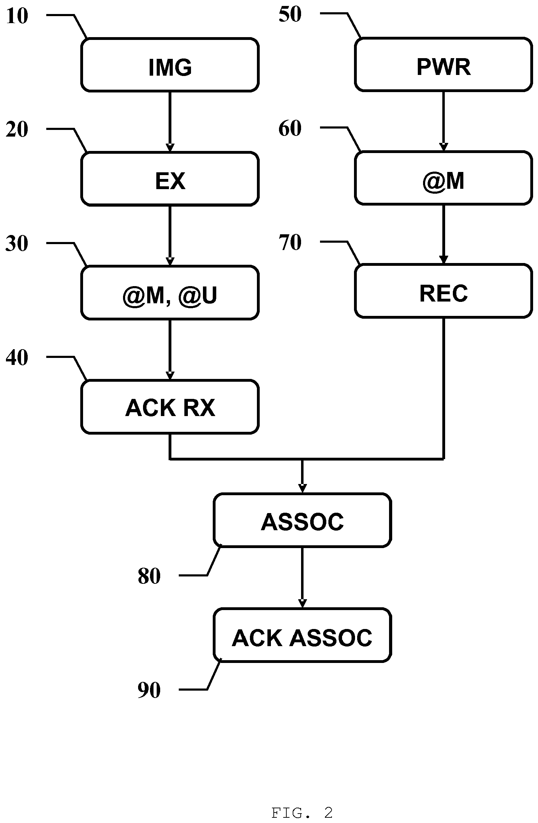

Un tel procédé de configuration comprend les étapes suivantes. Un mode de réalisation d'un tel procédé est illustré à la figure 2. De plus les étapes ont été figurées sur la figure 1, associées aux modules les réalisant en principal ou aux transitions auxquelles elles correspondent.

Une première étape consiste en une capture 10, notée IMG, d'une image d'un pictogramme 7 associé au terminal machine 1 au moyen du moyen de capture d'image 6 du terminal utilisateur 2. Pour réaliser cette étape, l'utilisateur 3 emploie le moyen de capture d'image 6 du terminal utilisateur 2, le place en regard du pictogramme 7 associé au terminal machine 1, soit en regard du terminal machine 1 ou du support annexe associé selon le cas, et réalise un cliché capturant une image dudit pictogramme 7. Ceci est typiquement réalisé au moyen d'une application logicielle s'exécutant, au moins en partie, sur ledit terminal utilisateur 2.

Le procédé se poursuit avec une deuxième étape d'extraction 20, notée EX, de l'image du pictogramme 7 capturée à l'étape précédente 10 afin d'extraire une adresse @M du terminal machine 1. Cette étape est avantageusement réalisée par une application logicielle embarquée sur le terminal utilisateur 2. Alternativement il est possible de transférer l'image à un autre module du réseau de communication cellulaire 4 qui réalise alors l'extraction. Ceci nécessite de transférer une image et donc de manière préjudiciable un important volume de données.

L'adresse @M du terminal machine 1 est ainsi connue. Le terminal utilisateur 2 connaît sa propre adresse @U et est en mesure de la fournir. Le procédé connaît l'adresse @M du terminal machine 1 et l'adresse @U du terminal utilisateur 2. Il peut alors être procédé à une étape d'association 80 de l'adresse @M du terminal machine 1 et de l'adresse @U du terminal utilisateur 2.

Ladite association 80, notée ASSOC, peut être réalisée de plusieurs manières.

Selon un premier mode de réalisation, l'adresse @U du terminal utilisateur 2 ayant réalisée une capture 10 du pictogramme 7 est transmise au terminal machine 1 correspondant, via le réseau de communication 4. Le terminal machine 1 correspondant est ici identifié par son adresse @M codée dans ledit pictogramme 1, et cette même adresse @M est avantageusement utilisée pour réaliser la transmission de l'adresse @U du terminal utilisateur 2. Le terminal machine 1 stocke alors cette adresse @U du terminal utilisateur 2 associé et réalise ainsi l'étape d'association 80. L'adresse @U du terminal utilisateur 2, ainsi enregistrée, peut ensuite être utilisée par le terminal machine 1 chaque fois qu'il doit transmettre un compte-rendu. L'association est ici gérée de manière distribuée. Une telle approche est avantageuse en ce qu'elle permet de ne pas nécessiter de module central, tel que le module de gestion 5 décrit plus avant.

Selon un autre mode de réalisation préféré, l'association peut être gérée de manière centralisée. Dans ce cas un module du réseau de communication 4, que l'on nomme module de gestion 5, est en charge de rassembler l'adresse @M du terminal machine 1 extraite précédemment au cours de l'étape d'extraction 20, et l'adresse @U du terminal utilisateur 2. Ceci peut être réalisé par une étape de transmission 30, le module de gestion 5 étant destinataire. L'étape de transmission 30 est, par exemple, réalisée après l'extraction 20 de l'adresse @M du terminal machine 1 par le terminal utilisateur 2 par envoi d'un message au module de gestion 5. Avantageusement ce message est un message court service, SMS, formaté et envoyé par le terminal utilisateur 2. Ce message comprend avantageusement l'adresse @M du terminal machine 1 dans le corps de message et l'adresse @U du terminal utilisateur 2 dans l'entête de message en tant qu'émetteur du message. Ainsi la réception de ce message par le module de gestion 5 fournit à ce dernier les deux adresses @M et @U. Le module de gestion 5 peut alors réaliser l'association 80 des deux adresses @M, @U.

Pour cela le module de gestion 5 peut gérer une base de données 8. Lors de l'étape d'association 80, un enregistrement de ladite base de données est créé ou mis à jour afin de contenir ensemble l'adresse @M du terminal machine 1 et l'adresse @U du terminal utilisateur 2.

Ainsi ultérieurement, lorsque le terminal machine 1 doit envoyer un compte-rendu destiné au terminal utilisateur 2 associé, le compte-rendu est adressé à un module du réseau de communication 4 en charge de l'acheminement. Ce module d'acheminement, peut utilement consulter la base de données 8. Le module d'acheminement recherche un enregistrement de la base de données 8 contenant l'adresse @M du terminal machine 1 émetteur du compte-rendu et obtient alors la ou les adresse(s) @U du ou des terminal(aux) utilisateur 2 associé(s) contenue(s) dans le même enregistrement. Le module d'acheminement peut alors faire suivre le compte-rendu au(x) terminal(aux) utilisateur 2 destinataire(s) au moyen de(s) la adresses(s) @U. Le module d'acheminement et le module de gestion 5 peuvent être confondus.

Le formatage du message contenant les deux adresses @M et @U et l'envoi 30 dudit message au module de gestion 5 sont avantageusement réalisés automatiquement, suite à la capture 10 / extraction 20, par une application logicielle embarquée sur le terminal utilisateur 2.

Ainsi, vu d'un utilisateur 3, la configuration d'un terminal machine 1 s'effectue simplement. L'utilisateur 3 utilise une application logicielle dédiée, chargée sur le terminal utilisateur 2. Une fois cette application lancée, il est demandé à l'utilisateur 3 de réaliser une capture du pictogramme 7. Ceci est typiquement réalisé comme une prise d'une photo avec le moyen de capture d'image 6. Cette seule action de capture 10 initie le procédé et est automatiquement suivie de la réalisation des autres étapes : extraction 20, transmission 30, et le cas échéant acquittement 40.

A ce stade, la configuration par association peut être terminée. Il peut cependant être ajouté au procédé les étapes additionnelles suivantes.

A réception de la transmission 30, il peut avantageusement être procédé à une étape d'acquittement de réception 40, notée ACK RX. Ainsi le module de gestion 5 acquitte auprès du terminal utilisateur 2, la bonne réception des deux adresses @M, @U.

Selon une caractéristique optionnelle, il peut être demandé à l'utilisateur 3, via un message adressé au terminal utilisateur 2 afin d'être présenté à l'utilisateur 3, de mettre sous tension le terminal machine 1.

Une telle demande peut n'être envoyée que si le terminal machine 1 n'a jamais auparavant été mis sous tension/connecté au réseau de communication 4. Le cas échéant une telle demande peut avantageusement être jointe à l'acquittement de réception 40 précédemment décrit.

Une telle opération de première mise sous tension 50, notée PWR, du terminal machine 1 provoque avantageusement une connexion du terminal machine 1 au réseau de communication 4. Au cours de cette première connexion le terminal machine 1 se fait reconnaître et identifier du réseau de communication, par exemple en envoyant son adresse @M. Cette adresse @M est transmise au module de gestion 5 qui est alors informé que le terminal machine 1 a été mis en service.

A cette occasion, le module de gestion 5 peut dérouler une étape de création 70, notée REC, d'un enregistrement dans la base de données 8 d'association. Ledit enregistrement est avantageusement rempli avec l'adresse @M du terminal machine 1. L'enregistrement est ensuite complété lors de l'étape d'association 80 en y adjoignant l'adresse @U du terminal utilisateur 2, immédiatement si elle est déjà disponible, ou lors de sa réception au cours de l'étape de transmission 30.

Cette étape de création 70 d'un enregistrement permet aussi avantageusement d'attester que le terminal 1 a déjà été mis sous tension et identifié par le réseau. Aussi, lors de l'étape d'acquittement 40, la présence ou non d'un enregistrement comprenant l'adresse @M permet ne pas demander la mise sous tension du terminal machine 1.

De même l'étape d'association 80 est adaptée en conséquence. Si l'enregistrement existe déjà il est complété par l'ajout de l'adresse @U du terminal utilisateur 2. Si l'enregistrement n'existe pas il est créé lors de l'étape d'association 80.

Une autre étape optionnelle, après une association 80 réussie peut consister en une étape d'acquittement d'association 90 notée ACK ASSOC. Au cours de cette étape, un message est envoyé au terminal utilisateur 2, afin de prévenir l'utilisateur 3 que le procédé de configuration s'est achevé dans de bonnes conditions.

Le procédé précédemment décris est avantageusement mis en oeuvre au moyen d'un programme d'ordinateur. Ce programme d'ordinateur est typiquement réparti au moins en trois entités logicielles. Une entité logicielle est embarquée sur le terminal utilisateur 2. Une autre entité logicielle peut être embarquée sur le terminal machine 1. Une autre entité logicielle optionnelle, comprenant typiquement au moins un module de gestion 5 et un module d'acheminement s'exécute sur au moins un noeud de l'infrastructure du réseau de communication 4. Ces entités logicielles collaborent par échange de messages pour réaliser le procédé.

Dans un mode de réalisation centralisé, un module de gestion 5 permet la mise en oeuvre du procédé. Pour cela une base de données 8 d'association est utilisée et gérée par le module de gestion 5. Dans cette base de données 8 sont stockés des enregistrements associant une adresse @M d'un terminal machine 1 avec au moins une adresse @U d'au moins un terminal utilisateur 2. La description précédente a été donnée en ne mentionnant parfois qu'un terminal utilisateur 2. La configuration nécessite au moins un tel terminal utilisateur 2 afin que le terminal machine 1 dispose d'au moins un destinataire pour envoyer un compte-rendu. Cependant il est possible d'associer plusieurs terminaux utilisateurs 2 destinataires à un terminal machine 1. Dans ce cas les associations supplémentaires peuvent être réalisées en appliquant le même procédé avec chacun des terminaux utilisateur 2 ou en utilisant une quelconque autre méthode de l'art antérieur. De même, pour l'un, certains ou tous les utilisateurs, plusieurs types de messages peuvent être utilisés comme par exemple un SMS, un courriels, un message vocal etc.

La configuration d'association une fois réalisée, peut avantageusement être utilisée lorsque le terminal machine 1 doit transmettre un compte-rendu à son (ou ses) terminal(aux) utilisateur 2 associé(s). Un module d'acheminement, qui peut être compris ou associé avec le module de gestion 5, comprend avantageusement un moyen de réception. Ce moyen de réception est apte à recevoir ledit compte-rendu. Ceci est réalisé soit en ce que le terminal machine 1 adresse son compte-rendu audit moyen de réception, soit en ce que le moyen de réception intercepte ledit compte-rendu lors de son émission par le terminal machine 1. Ledit module d'acheminement comprend encore un moyen de consultation apte à consulter la base de données 8 d'association. Cette consultation permet de déterminer la ou les adresse(s) @U de terminal utilisateur 2 associé(s) en fonction de l'adresse @M du terminal machine 1 émetteur du compte-rendu. Le moyen d'acheminement comprend encore un moyen d'envoi apte à envoyer/transmettre ledit compte-rendu audit(s) terminal(aux) utilisateur 2 en l'adressant à la ou les adresse(s) @U ainsi obtenue(s) par consultation de la base de données 8.

L'invention est plus particulièrement prévue pour une mise en oeuvre d'une configuration par un utilisateur 3 non technicien, par exemple pour un système domotique.

Un tel système domotique particulièrement intéressant concerne un système de surveillance d'une alimentation électrique. Dans ce cas le système comprend un segment émetteur / un terminal machine 1, comprenant un terminal communicant avec le réseau de communication 4 et une partie machine qui comprend un moyen de mesure apte à mesurer au moins un paramètre électrique d'une alimentation électrique tel qu'une valeur de tension ou de courant. Ce moyen de mesure permet de réaliser au moins une mesure de surveillance. Ensuite ladite mesure est comparée avec un intervalle de valeurs de référence. Ladite partie machine comprend encore un moyen d'alarme apte à déclencher une alarme lorsque l'un au moins dudit au moins un paramètre électrique est en dehors d'un intervalle de valeurs de référence. Ladite partie machine comprend encore un moyen d'envoi apte à envoyer un message d'alarme à un terminal utilisateur 2 en cas de déclenchement d'une alarme. Par exemple, lorsque le courant devient nul, témoignant par exemple d'une panne électrique, le terminal machine 1 envoie une alerte.

Le compte-rendu du terminal machine 1 au terminal utilisateur 2 est ici un message d'alarme, qui peut n'être envoyé qu'en cas d'excursion hors d'au moins un intervalle de valeurs de référence. Alternativement, un compte-rendu de bon fonctionnement peut encore être envoyé en dehors des situations d'alarme.

Un tel terminal machine 1 / dispositif de surveillance est avantageusement disposé de manière à surveiller l'alimentation électrique d'un appareil domestique sensible, tel par exemple un congélateur. Ledit dispositif de surveillance envoie ainsi une alarme en cas de défaillance. Cette alarme est adressée à un segment récepteur du système, comprenant au moins un terminal utilisateur 2, ou téléphone mobile de l'utilisateur 3.

Un tel système permet ainsi à un utilisateur 3 de faire surveiller l'alimentation électrique d'un appareil domestique sensible. L'utilisateur 3 est alors prévenu par une alarme envoyée par le système en cas de défaillance. Ladite alarme est, par exemple un message court service, SMS, envoyé automatiquement sur son téléphone portable 2.

Une étape de configuration permettant d'associer / d'apparier un terminal machine 1, typiquement spécifiquement acheté, et un terminal utilisateur 2, typiquement préalablement en possession de l'utilisateur 3, est nécessaire pour permettre un bon fonctionnement du système de surveillance et ne pourrait être réalisée préalablement à l'achat du terminal machine 1.

Un tel système s'adresse à un particulier utilisateur 3, non nécessairement technicien. Il apparaît alors à l'évidence l'intérêt d'une configuration réalisée de manière simple et intuitive selon le procédé de l'invention.

Comme mentionné précédemment, un ensemble de terminaux machine 1 est avantageusement géré par un module MLR dédié. Un tel module MLR permet, entre autres fonctions, d'adresser un grand nombre de terminaux machine 1, sans pour autant affecter un code MSISDN public individuel à chacun au risque d'encombrer inutilement l'espace des codes MSISDN. Un terminal machine 1 se voit alors associer un identifiant privé. Cet identifiant privé est connu et géré par un module MLR. Toute communication à l'attention d'un terminal machine 1 transite alors via ledit module MLR. Un message n'est pas envoyé directement à un terminal machine 1, mais est envoyé au module MLR, accompagné d'un moyen d'identifier, par exemple ledit identifiant privé, de manière univoque le terminal machine 1. Ledit identifiant privé permet au module MLR d'identifier et de localiser le terminal machine 1 destinataire. Le module MLR est alors en mesure de faire suivre le message au terminal machine 1. Le module MLR occupe une place centrale de choix dans les échanges à destination d'un terminal machine 1, en ce qu'il constitue un passage obligé.

A ce titre, le module MLR est avantageusement particulièrement désigné pour intégrer le module de gestion 5. Le module d'acheminement est aussi naturellement intégré au module MLR.

Comme cela ressort clairement de ce qui est décrit ci-dessus, l'invention prévoit un système de configuration par association d'un terminal machine 1 avec au moins un terminal utilisateur 2, par indication d'une adresse (@U) du terminal utilisateur sur un réseau de communication cellulaire. Le terminal machine et le terminal utilisateur 2 comprennent chacun une adresse (@M, @U) et sont chacun apte à être connecté au réseau de communication cellulaire 4. Le système comprend en outre le terminal utilisateur 2 ainsi qu'un moyen de capture d'image 6 qui est incorporé dans le terminal utilisateur 2 et qui est configuré pour capturer une image d'un pictogramme 7 associé au terminal machine 1. Le système comprend également un module de gestion 5 connecté au réseau de communication cellulaire 4 et distant à la fois du terminal machine et du terminal utilisateur. Le module de gestion 5 est configuré pour effectuer une association 80 de l'adresse (@M) du terminal machine 1 extraite avec l'adresse (@U) du terminal utilisateur 2. Le terminal utilisateur 2 est configuré pour effectuer :
- l'extraction de l'adresse (@M) du terminal machine 1 depuis l'image du pictogramme 7 capturée, et
- la transmission d'un message au module de gestion 5, le message comprenant l'adresse (@M) du terminal machine 1 extraite et l'adresse (@U) du terminal utilisateur (2).

Bien qu'il soit décrit dans la présente un mode de réalisation préféré de l'invention, il doit être bien compris que l'invention n'est pas limitée à ce mode.

## Revendications

1. Procédé de configuration par association d'un terminal machine (1) avec au moins un terminal utilisateur (2), par indication d'une adresse, @U, du terminal utilisateur (2) sur un réseau de communication cellulaire (4), le terminal machine (1) et le terminal utilisateur (2) comprenant chacun une adresse, @M, @U, et étant chacun apte à être connecté au réseau de communication cellulaire (4), le terminal utilisateur (2) comprenant en outre un moyen de capture d'image (6), le procédé comprenant les étapes suivantes :
- une étape de capture (10) d'une image d'un pictogramme (7) associé au terminal machine (1) au moyen du moyen de capture d'image (6) du terminal utilisateur (2),
**caractérisé en ce que** le procédé comprend également les étapes suivantes :
- une étape d'extraction (20) d'une adresse, @M, du terminal machine (1) depuis l'image du pictogramme (7) capturée, ladite étape d'extraction (20) étant effectuée par le terminal utilisateur (2),
- une étape de transmission (30) d'un message à un module de gestion (5) connecté au réseau de communication cellulaire (4) et distant du terminal machine (1) et du terminal utilisateur (2), cette étape de transmission (30) étant effectuée par le terminal utilisateur (2), le message comprenant l'adresse, @M, du terminal machine (1) extraite et l'adresse, @U, du terminal utilisateur (2),
- une étape d'association (80) de l'adresse, @M, du terminal machine (1) extraite avec l'adresse, @U, du terminal utilisateur (2), cette étape étant effectuée par le module de gestion (5),
- l'enregistrement dans une base de données (8) de l'adresse, @M, du terminal machine (1) en association avec l'adresse, @U, du terminal utilisateur (2) ;
le procédé étant également **caractérisé en ce que** le module de gestion (5) effectue les étapes suivantes :
- recevoir via ledit réseau de communication cellulaire (4) un compte-rendu en provenance du terminal machine (1);
- consulter ladite base de données (8) afin de déterminer l'adresse, @U, du terminal utilisateur (2) associé audit terminal machine (1),
- envoyer, via ledit réseau de communication cellulaire (4), un message relatif audit compte-rendu audit terminal utilisateur (2) associé au moyen de ladite adresse, @U, de terminal utilisateur (2).

2. Procédé selon la revendication précédente, dans lequel ledit message comprend un corps et un entête, le corps comprenant l'adresse, @M, du terminal machine (1) et l'entête comprenant l'adresse, @U, du terminal utilisateur en tant qu'émetteur.

3. Procédé selon l'une quelconque des revendications précédentes, comprenant encore, après l'étape de transmission (30), une étape d'acquittement comprenant la réception par le terminal utilisateur (2) d'un acquittement de réception (40) et où l'étape d'acquittement est assortie d'une demande de mise sous tension du terminal machine (1).

4. Procédé selon l'une quelconque des revendications précédentes, où une première mise sous tension (50) du terminal machine (1) entraîne une étape d'envoi (60) par le terminal machine (1) de son adresse, @M, au module de gestion (5) et où la réception de l'adresse, @M, du terminal machine (1) envoyée, entraîne une étape de création (70) d'un enregistrement dans une base de données (8) d'association comprenant l'adresse, @M, du terminal machine (1).

5. Procédé selon l'une quelconque des revendications précédentes, dans lequel ledit enregistrement est complété lors de l'étape d'association (80) avec l'adresse, @U, du terminal utilisateur (2) reçue au cours de l'étape de transmission (30).

6. Procédé selon l'une quelconque des deux revendications précédentes, comprenant une étape d'ajout, dans la base de données (8) d'au moins une adresse additionnelle pour un terminal utilisateur additionnel associé audit terminal machine (1).

7. Procédé selon l'une quelconque des revendications précédentes dans lequel ledit message est de type message court service.

8. Produit programme d'ordinateur, inscrit sur un support non transitoire lisible par un ordinateur, comprenant des instructions qui lorsqu'elles sont effectuées par au moins un processeur, exécutent au moins les étapes du procédé selon l'une quelconque des revendications précédentes.

9. Système de configuration par association d'un terminal machine (1) avec au moins un terminal utilisateur (2), par indication d'une adresse, @U, du terminal utilisateur (2) sur un réseau de communication cellulaire (4), le système comprenant le terminal machine (1) et le terminal utilisateur (2), le terminal machine (1) et le terminal utilisateur (2) comprenant chacun une adresse, @M, @U, et étant chacun apte à être connecté au réseau de communication cellulaire (4),le système étant **caractérisé en ce qu'**il comprend:
- un moyen de capture d'image (6) incorporé dans le terminal utilisateur (2) et configuré pour capturer une image d'un pictogramme (7) associé au terminal machine (1),
un module de gestion (5) connecté au réseau de communication cellulaire (4) et distant du terminal machine (1) et du terminal utilisateur (2), le module de gestion (5) étant configuré pour effectuer une association (80) de l'adresse, @M, du terminal machine (1) extraite avec l'adresse, @U, du terminal utilisateur (2) et pour enregistrer cette association dans une base de données (8),
- le système de configuration étant également **caractérisé en ce que** le terminal utilisateur (2) est configuré pour effectuer :
- l'extraction de l'adresse, @M, du terminal machine (1) depuis l'image du pictogramme (7) capturée, et
- la transmission d'un message au module de gestion (5), le message comprenant l'adresse, @M, du terminal machine (1) extraite et l'adresse, @U, du terminal utilisateur (2),
et dans lequel le module de gestion (5) comprend un moyen de réception apte à recevoir via ledit réseau de communication cellulaire (4) un compte-rendu en provenance du terminal machine (1), un moyen de consultation apte à consulter ladite base de données (8) afin de déterminer ladite adresse, @U, du terminal utilisateur (2) associé audit terminal machine (1), et un moyen d'envoi apte à envoyer, via ledit réseau de communication cellulaire (4), un message fonction dudit compte-rendu audit terminal utilisateur (2) associé au moyen de ladite adresse, @U, de terminal utilisateur (2).

10. Système de configuration selon la revendication précédente comprenant un moyen d'affichage incorporé dans le terminal machine (1) et configuré pour afficher le pictogramme (7) codant l'adresse, @M, dudit terminal machine (1) sur le réseau de communication cellulaire (4) et dans lequel ledit moyen d'affichage comprend une impression du pictogramme (7) sur le terminal machine (1), sur une étiquette collée sur le terminal machine (1) ou sur un support annexe associé au terminal machine (1).

11. Système de configuration selon l'une des deux revendications précédentes le module de gestion (5) est compris dans un module, MLR, qui comprend, en plus du module de gestion (5), un module registre de localisation, HLR, et un module registre d'identité d'équipement, EIR.

12. Système de configuration selon l'une quelconque des trois revendications précédentes, où l'adresse, @M, du terminal machine (1) comprend un numéro de téléphone court ou long, du module de gestion (5) et un identifiant du terminal machine (1) permettant audit module de gestion (5) d'identifier le terminal machine (1) et de lui adresser un message via le réseau de communication cellulaire (4).

13. Système de configuration selon l'une quelconque des quatre revendications précédentes, dans lequel le terminal machine (1) comprend : un moyen de mesure apte à mesurer au moins un paramètre ; un moyen d'envoi apte à envoyer un compte-rendu à travers le réseau de communication cellulaire (4) ; un moyen de déclenchement configuré pour déclencher l'envoi du compte-rendu uniquement lorsque l'un au moins un paramètre est en dehors d'un intervalle de valeurs de référence.

14. Module de gestion (5) au sein d'un réseau de communication cellulaire (4) en charge de la configuration d'un terminal machine (1) par association avec un terminal utilisateur (2), le module de gestion (5) étant distant du terminal machine (1) et du terminal utilisateur (2), **caractérisé en ce qu'**il comporte une base de données d'association (8) comprenant au moins un enregistrement associant une adresse, @M, du terminal machine (1) et au moins une adresse, @U, du terminal utilisateur (2), et **en ce qu'**il est configuré pour :
- recevoir, via ledit réseau de communication cellulaire (4), de la part du terminal utilisateur (2) un message comprenant l'adresse, @U, du terminal utilisateur (2) et l'adresse, @M, du terminal machine (1) préalablement extraite par le terminal utilisateur (2) depuis un pictogramme (7), l'adresse @M du terminal machine étant un code IMSI ;
- effectuer une étape d'association (80) de l'adresse, @M, du terminal machine (1) extraite avec l'adresse, @U, du terminal utilisateur (2) ;
- le module de gestion (5) comprenant un moyen de réception apte à recevoir un compte-rendu en provenance du terminal machine (1), un moyen de consultation apte à consulter ladite base de données (8) afin de déterminer ladite au moins une adresse, @U, d'un terminal utilisateur (2) associé audit terminal machine (1), et un moyen d'envoi apte à envoyer, via ledit réseau de communication cellulaire (4), ledit compte-rendu audit au moins un terminal utilisateur (2) associé au moyen de ladite au moins une adresse de terminal utilisateur (2).

15. Module de gestion (5) selon la revendication précédente, où le module de gestion (5) est compris dans un module, MLR, qui comprend, en plus du module de gestion (5), un module registre de localisation, HLR, et un module registre d'identité d'équipement EIR.

## Patentansprüche

1. Verfahren zum Konfigurieren durch Assoziieren eines Maschinenendgeräts (1) mit zumindest einem Benutzerendgerät (2) durch Angeben einer Adresse @U des Benutzerendgeräts (2) über ein zellulares Kommunikationsnetz (4), wobei das Maschinenendgerät (1) und das Benutzerendgerät (2) jeweils eine Adresse @M, @U enthalten und jeweils dazu geeignet sind, mit dem zellularen Kommunikationsnetz (4) verbunden zu werden, wobei das Benutzerendgerät (2) ferner eine Bildaufnahmeeinrichtung (6) enthält, wobei das Verfahren die folgenden Schritte umfasst:
- einen Schritt (10) des Aufnehmens von einem Bild eines dem Maschinenendgerät (1) zugeordneten Piktogramms (7) mittels der Bildaufnahmeeinrichtung (6) des Benutzerendgeräts (2),
**dadurch gekennzeichnet, dass** das Verfahren ferner die folgenden Schritte umfasst:
- einen Schritt (20) des Extrahierens einer Adresse @M des Maschinenendgeräts (1) aus dem aufgenommenen Bild des Piktogramms (7), wobei der Extraktionsschritt (20) über das Benutzerendgerät (2) ausgeführt wird,
- einen Schritt (30) des Übertragens einer Nachricht an ein Verwaltungsmodul (5), das mit dem zellularen Kommunikationsnetz (4) verbunden und vom Maschinenendgerät (1) und vom Benutzerendgerät (2) entfernt liegt, wobei dieser Übertragungsschritt (30) über das Benutzerendgerät (2) ausgeführt wird, wobei die Nachricht die extrahierte Adresse @M des Maschinenendgeräts (1) und die Adresse @U des Benutzerendgeräts (2) enthält,
- einen Schritt (80) des Assoziierens der extrahierten Adresse @M des Maschinenendgeräts (1) mit der Adresse @U des Benutzerendgeräts (2), wobei dieser Schritt über das Verwaltungsmodul (5) ausgeführt wird,
- das Aufzeichnen der Adresse @M des Maschinenendgeräts (1) in einer Datenbank (8) in Assoziation mit der Adresse @U des Benutzerendgeräts (2);
wobei das Verfahren ferner **dadurch gekennzeichnet ist, dass** das Verwaltungsmodul (5) die folgenden Schritte ausführt:
- Empfangen eines von dem Maschinenendgerät (1) stammenden Berichts über das zellulare Kommunikationsnetz (4);
- Abfragen der Datenbank (8), um die Adresse @U des Benutzerendgerätes (2) zu ermitteln, das dem Maschinenendgerät (1) zugeordnet ist,
- Senden einer auf den Bericht bezogenen Nachricht an das zugeordnete Benutzerendgerät (2) mittels der Adresse @U des Benutzerendgerätes (2) über das zellulare Kommunikationsnetz (4).

2. Verfahren nach dem vorangehenden Anspruch, wobei die Nachricht einen Body und einen Header enthält, wobei der Body die Adresse @M des Maschinenendgeräts (1) enthält und der Header die Adresse @U des Benutzerendgeräts als Sender enthält.

3. Verfahren nach einem der vorangehenden Ansprüche, ferner umfassend nach dem Übertragungsschritt (30) einen Bestätigungsschritt, der den Empfang einer Empfangsbestätigung (40) durch das Benutzerendgerät (2) umfasst, wobei der Bestätigungsschritt von einer Anforderung begleitet wird, das Maschinenendgerät (1) einzuschalten.

4. Verfahren nach einem der vorangehenden Ansprüche, wobei ein erstes Einschalten (50) des Maschinenendgeräts (1) einen Schritt (60) des Sendes seiner Andresse @M von dem Maschinenendgerät (1) an das Verwaltungsmodul (5) bewirkt und wobei der Empfang der gesendeten Adresse @M des Maschinenendgeräts (1) einen Schritt (70) des Erstellens eines Eintrags in einer Assoziationsdatenbank (8) bewirkt, der die Adresse @M des Maschinenendgeräts (1) enthält.

5. Verfahren nach einem der vorangehenden Ansprüche, wobei der Eintrag bei dem Schritt (80) des Assoziierens mit der im Laufe des Übertragungsschritts (30) empfangenen Adresse @U des Benutzerendgeräts (2) vervollständigt wird.

6. Verfahren nach einem der beiden vorangehenden Ansprüche, umfassend einen Schritt des Hinzufügens von zumindest einer zusätzlichen Adresse in die Datenbank für ein zusätzliches Benutzerendgerät, das dem Maschinenendgerät (1) zugeordnet ist.

7. Verfahren nach einem der vorangehenden Ansprüche, wobei die Nachricht vom Typ Short Message Service ist.

8. Computerprogrammprodukt, das auf einem nichtflüchtigen computerlesbaren Medium abgespeichert ist, umfassend Anweisungen, die, wenn sie von zumindest einem Prozessor ausgeführt werden, zumindest die Schritte des Verfahrens nach einem der vorangehenden Ansprüche ausführen.

9. System zum Konfigurieren durch Assoziieren eines Maschinenendgeräts (1) mit zumindest einem Benutzerendgerät (2) durch Angeben einer Adresse @U des Benutzerendgeräts (2) über ein zellulares Kommunikationsnetz (4), wobei das System das Maschinenendgerät (1) und das Benutzerendgerät (2) enthält, wobei das Maschinenendgerät (1) und das Benutzerendgerät (2) jeweils eine Adresse @M, @U enthalten und jeweils dazu geeignet sind, mit dem zellularen Kommunikationsnetz (4) verbunden zu werden, wobei das System **dadurch gekennzeichnet ist, dass** es enthält:
- eine Bildaufnahmeeinrichtung (6), die dem Benutzerendgerät (2) integriert und dazu ausgelegt ist, ein Bild eines Piktogramms (7) aufzunehmen, das dem Maschinenendgerät (1) zugeordnet ist,
- ein Verwaltungsmodul (5), das mit dem zellularen Kommunikationsnetz (4) verbunden und vom Maschinenendgerät (1) und vom Benutzerendgerät (2) entfernt liegt, wobei das Verwaltungsmodul (5) dazu ausgelegt ist, eine Assoziation (80) der extrahierten Adresse @M des Maschinenendgeräts (1) mit der Adresse @U des Benutzerendgeräts (2) durchzuführen und diese Assoziation in einer Datenbank (8) aufzuzeichnen,
- wobei das Konfigurationssystem ferner **dadurch gekennzeichnet ist, dass** das Benutzerendgerät (2) ausgelegt ist zum Durchführen von:
- dem Extrahieren der Adresse @M des Maschinenendgeräts (1) aus dem aufgenommenen Bild des Piktogramms (7), und
- dem Übertragen einer Nachricht an das Verwaltungsmodul (5), wobei die Nachricht die extrahierte Adresse @M des Maschinenendgeräts (1) und die Adresse @U des Benutzerendgeräts (2) enthält,
und wobei das Verwaltungsmodul (5) eine Empfangseinrichtung enthält, die dazu geeignet ist, über das zellulare Kommunikationsnetz (4) einen Bericht von dem Maschinenendgerät (1) zu empfangen, eine Abfrageeinrichtung, die dazu geeignet ist, die Datenbank (8) abzufragen, um die Adresse @U des dem Maschinenendgerät (1) zugeordneten Benutzerendgeräts (2) zu ermitteln, und eine Sendeeinrichtung, die dazu geeignet ist, über das zellulare Kommunikationsnetz (4) eine Nachricht in Abhängigkeit von dem Bericht an das zugeordnete Benutzerendgerät (2) mittels der Adresse @U des Benutzerendgeräts (2) zu senden.

10. Konfigurationssystem nach dem vorangehenden Anspruch, enthaltend eine Anzeigeeinrichtung, die dem Maschinenendgerät (1) integriert und dazu ausgelegt ist, das Piktogramm (7) anzuzeigen, das die Adresse @M des Maschinenendgeräts (1) in dem zellularen Kommunikationsnetz (4) kodiert, und wobei die Anzeigeeinrichtung einen Ausdruck des Piktogramms (7) an dem Maschinenendgerät (1), auf ein am Maschinenendgerät (1) haftendes Etikett oder auf einen dem Maschinenendgerät (1) zugeordneten Hilfsträger enthält.

11. Konfigurationssystem nach einem der beiden vorangehenden Ansprüche, wobei das Verwaltungsmodul (5) in einem Modul MLR enthalten ist, das neben dem Verwaltungsmodul (5) ein Standortregistermodul HLR und ein Geräteidentitätsregistermodul EIR enthält.

12. Konfigurationssystem nach einem der drei vorangehenden Ansprüche, wobei die Adresse @M des Maschinenendgeräts (1) eine kürzere oder längere Telefonnummer des Verwaltungsmoduls (5) und eine Kennung des Maschinenendgeräts (1) umfasst, die es dem Verwaltungsmodul (5) gestattet, das Maschinenendgerät (1) zu identifizieren und diesem eine Nachricht über das zellulare Kommunikationsnetz (4) zuzusenden.

13. Konfigurationssystem nach einem der vier vorangehenden Ansprüche, wobei das Maschinenendgerät (1) enthält: eine Messeinrichtung, die dazu geeignet ist, zumindest einen Parameter zu messen; eine Sendeeinrichtung, die dazu geeignet ist, einen Bericht durch das zellulare Kommunikationsnetz (4) zu senden; eine Auslöseeinrichtung, die dazu ausgelegt ist, das Senden des Berichts nur dann auszulösen, wenn zumindest ein Parameter außerhalb eines Intervalls von Referenzwerten liegt.

14. Verwaltungsmodul (5) innerhalb eines zellularen Kommunikationsnetzes (4), das für die Konfiguration eines Maschinenendgeräts (1) durch Assoziation mit einem Benutzerendgerät (2) zuständig ist, wobei das Verwaltungsmodul (5) vom Maschinenendgerät (1) und vom Benutzerendgerät (2) entfernt liegt, **dadurch gekennzeichnet, dass** es eine Assoziationsdatenbank (8) enthält, die zumindest einen Eintrag enthält, der eine Adresse @M des Maschinenendgeräts (1) und zumindest eine Adresse @U des Benutzerendgeräts (2) assoziiert, und dass es dazu ausgelegt ist, um
- über das zellulare Kommunikationsnetz (4) von dem Benutzerendgerät (2) eine Nachricht zu empfangen, die die Adresse @U des Benutzerendgeräts (2) und die Adresse @M des Maschinenendgeräts (1) enthält, die zuvor von dem Benutzerendgerät (2) aus einem Piktogramm (7) extrahiert wurde, wobei die Adresse @M des Maschinenendgeräts ein IMSI-Code ist;
- einen Schritt (80) des Assoziierens der extrahierten Adresse @M des Maschinenendgeräts (1) mit der Adresse @U des Benutzerendgeräts (2) auszuführen;
- wobei das Verwaltungsmodul (5) eine Empfangseinrichtung enthält, die dazu geeignet ist, einen von dem Maschinenendgerät (1) stammenden Bericht zu empfangen, eine Abfrageeinrichtung, die dazu geeignet ist, die Datenbank (8) abzufragen, um die zumindest eine Adresse @U eines dem Maschinenendgerät zugeordneten Benutzerendgeräts (2) zu ermitteln, und eine Sendeeinrichtung, die dazu geeignet ist, den Bericht über das zellulare Kommunikationsnetz (4) an das zumindest eine zugeordnete Benutzerendgerät (2) mittels der zumindest einen Adresse des Benutzerendgeräts (2) zu senden.

15. Verwaltungsmodul (5) nach dem vorangehenden Anspruch, wobei das Verwaltungsmodul (5) in einem Modul MLR enthalten ist, das neben dem Verwaltungsmodul (5) ein Standortregistermodul HLR und ein Geräteidentitätsregistermodul EIR enthält.

## Claims

1. Method for configuration by means of associating a machine terminal (1) with at least one user terminal (2) by indicating an address, @U, of the user terminal (2) on a cellular communication network (4), the machine terminal (1) and the user terminal (2) each comprising an address, @M, @U, and each being suitable for being connected to the cellular communication network (4), the user terminal (2) further comprising an image-capturing means (6), the method comprising the following steps:
- a step (10) of capturing an image of an icon (7) associated with the machine terminal (1) using the image-capturing means (6) of the user terminal (2),
**characterized in that** the method also comprises the following steps:
- a step (20) of extracting an address, @M, of the machine terminal (1) from the captured image of the icon (7), said extraction step (20) being carried out by the user terminal (2),
- a step (30) of transmitting a message to a management module (5) that is connected to a cellular communication network (4) and is remote from the machine terminal (1) and the user terminal (2), said transmission step (30) being carried out by the user terminal (2), the message comprising the extracted address, @M, of the machine terminal (1) and the address, @U, of the user terminal (2),
- a step (80) of associating the extracted address, @M, of the machine terminal (1) with the address, @U, of the user terminal (2), said step being carried out by the management module (5),
- recording the address, @M, of the machine terminal (1) in association with the address, @U, of the user terminal (2) in a database (8);
the method also being **characterized in that** the management module (5) carries out the following steps:
- receiving a report from the machine terminal (1) via said cellular communication network (4),
- querying said database (8) in order to determine the address, @U, of the user terminal (2) associated with said machine terminal (1),
- sending a message relating to said report to said associated user terminal (2) via said cellular communication network (4) by means of said address, @U, of the user terminal (2).

2. Method according to the preceding claim, wherein said message comprises a body and a header, the body comprising the address, @M, of the machine terminal (1) and the header comprising the address, @U, of the user terminal as emitter.

3. Method according to either of the preceding claims, further comprising, after the transmission step (30), an acknowledgement step comprising the receipt by the user terminal (2) of a receipt acknowledgement (40), and wherein the acknowledgement step is accompanied by a request to switch on the machine terminal (1).

4. Method according to any of the preceding claims, wherein a first switching on (50) of the machine terminal (1) brings about a step (60) of the machine terminal (1) sending the address, @M, thereof to the management module (5), and wherein the receipt of the sent address, @M, of the machine terminal (1) brings about a step (70) of creating a record in an association database (8) comprising the address, @M, of the machine terminal (1).

5. Method according to any of the preceding claims, wherein said record is completed during the step (80) of association with the address, @U, of the user terminal (2) received during the transmission step (30).

6. Method according to either of the two preceding claims, comprising a step of adding at least one additional address for an additional user terminal associated with said machine terminal (1) to the database (8).

7. Method according to any of the preceding claims, wherein said message is a short message service.

8. Computer program product written to a non-transitory computer-readable medium, comprising instructions which, when carried out by at least one processor, execute at least the steps of the method according to any of the preceding claims.

9. System for configuration by means of associating a machine terminal (1) with at least one user terminal (2) by indicating an address, @U, of the user terminal (2) on a cellular communication network (4), the system comprising the machine terminal (1) and the user terminal (2), the machine terminal (1) and the user terminal (2) each comprising an address, @M, @U, and each being suitable for being connected to the cellular communication network (4), the system being **characterized in that** it comprises:
- an image-capturing means (6) integrated in the user terminal (2) and configured to capture an image of an icon (7) associated with the machine terminal (1),
a management module (5) that is connected to the cellular communication network (4) and is remote from the machine terminal (1) and the user terminal (2), the management module (5) being configured to associate (80) the extracted address, @M, of the machine terminal (1) with the address, @U, of the user terminal (2), and to record said association in a database (8),
- the system for configuration also being **characterized in that** the user terminal (2) is configured to carry out:
- the extraction of the address, @M, of the machine terminal (1) from the captured image of the icon (7), and
- the transmission of a message to the management module (5), the message comprising the extracted address, @M, of the machine terminal (1) and the address, @U, of the user terminal (2),
and the management module (5) comprising a receiving means suitable for receiving a report from the machine terminal (1) via said cellular communication network (4), a querying means suitable for querying said database (8) in order to determine said address, @U, of the user terminal (2) associated with said machine terminal (1), and a sending means suitable for sending a message acting as said report to said associated user terminal (2) via said cellular communication network (4) by means of said address, @U, of the user terminal (2).

10. System for configuration according to the preceding claim, comprising a display means integrated in the machine terminal (1) and configured to display the icon (7) encoding the address, @M, of said machine terminal (1) on the cellular communication network (4), and wherein said display means comprises a print of the icon (7) on the machine terminal (1), on a label adhered to the machine terminal (1) or on an additional medium associated with the machine terminal (1).

11. System for configuration according to either of the two preceding claims, the management module (5) being included in one module, MLR, which comprises a home location register, HLR, and an equipment identity register, EIR, in addition to the management module (5).

12. System for configuration according to any of the three preceding claims, wherein the address, @M, of the machine terminal (1) comprises a short or long telephone number of the management module (5) and an identifier of the machine terminal (1) allowing said management module (5) to identify the machine terminal (1) and address a message thereto via the cellular communication network (4).

13. System for configuration according to any of the four preceding claims, wherein the machine terminal (1) comprises: a measuring means suitable for measuring at least one parameter; a sending means suitable for sending a report via the cellular communication network (4); a trigger means configured to trigger the sending of a report only when the at least one parameter is outside a range of reference values.

14. Management module (5) within a cellular communication network (4) responsible for the configuration of a machine terminal (1) by means of association with a user terminal (2), the management module (5) being remote from the machine terminal (1) and the user terminal (2), **characterized in that** it comprises an association database (8) comprising at least one record associating an address, @M, of the machine terminal (1) and at least one address, @U, of the user terminal (2), and **in that** it is configured to:
- receive a message comprising the address, @U, of the user terminal (2) and the address, @M, of the machine terminal (1) that was previously extracted from an icon (7) by the user terminal (2) via said cellular communication network (4) from the user terminal (2), the address @M of the machine terminal (1) being an IMSI code;
- carry out a step (80) of associating the extracted address, @M, of the machine terminal (1) with the address, @U, of the user terminal (2);
- the management module (5) comprising a receiving means suitable for receiving a report from the machine terminal (1), a querying means suitable for querying said database (8) in order to determine said at least one address, @U, of a user terminal (2) associated with said machine terminal (1), and a sending means suitable for sending said report to said at least one associated user terminal (2) via said cellular communication network (4) by means of said at least one user terminal (2) address.

15. Management module (5) according to the preceding claim, wherein the management module (5) is included in a module, MLR, which comprises a home location register, HLR, and an equipment identity register, EIR, in addition to the management module (5).
